# EUROPÄISCHE PATENTSCHRIFT

(11) **EP 1 548 333 B1**
(45) Veröffentlichungstag und Bekanntmachung des Hinweises auf die Patenterteilung: **06.09.2006**
(21) Anmeldenummer: 04026109.1
(22) Anmeldetag: 04.11.2004
(51) Int. Cl.: F16H 63/30

(54) **Druckmittelbetätigte Schaltvorrichtung eines Stufenwechselgetriebes**
Fluid actuated shift device of a transmission
Dispositif avec fluide de changement de vitesses d'une transmission

(30) Priorität: 28.11.2003 DE 10356270
(43) Veröffentlichungstag der Anmeldung: 29.06.2005
(73) Patentinhaber: Schaeffler KG, 91074 Herzogenaurach (DE)
(72) Erfinder: Hirt, Gunter, 90617 Puschendorf (DE); Grieshammer, Andreas, 90429 Nürnberg (DE)

(56) Entgegenhaltungen:
- DE-A- 3 435 160
- DE-C- 10 110 941

## Beschreibung

### Gebiet der Erfindung

Die Erfindung betrifft eine druckmittelbetätigte Schaltvorrichtung eines Stufenwechselgetriebes nach dem Oberbegriff des Anspruchs 1.

Es sind druckmittelbetätigte Schaltvorrichtungen eines Stufenwechselgetriebes bekannt, bei denen die Enden einer Schaltstange bzw. einer Schaltschiene kolbenförmig ausgebildet sind. Die Kolben sind axial verschiebbar in Zylindern, die im Getriebegehäuse ausgebildet sind, geführt. Die Kolben und die Zylinder bilden Druckkammern aus. Über Druckmittelleitungen, die im Getriebegehäuse angeordnet sind, können diese Druckkammern mit Druckmittel versorgt werden. Der daraus resultierende Druck in den Druckkammern beaufschlagt die Kolben und damit die Schaltstange mit einer axial gerichteten Kraft. Durch Anlegen unterschiedlicher Drücke an die zwei Druckkammern kann die Schaltstange in einer definierten Art und Weise zwischen mindestens zwei Positionen verschoben werden. Gleichzeitig mit der Schaltstange wird ein daran befestigtes Schaltelement zwischen diesen mindestens zwei axial benachbarten Stellungen verschoben. Bei dem Schaltelement kann es sich entweder um eine Schaltgabel oder einen Schaltfinger handeln. Meist wird die Schaltstange zwischen drei axial benachbarten Positionen verschoben, wobei die axial außen liegenden Stellungen einem eingelegten Gang und die mittlere Stellung einer Neutralstellung entsprechen. Als Druckmittel wäre eine geeignete Hydraulikflüssigkeit oder Druckluft denkbar. Weiterhin ist es durchaus denkbar auch andere Getriebeelemente, wie beispielsweise ein Zahnrad zum Schalten eines Rückwärtsganges auf diese Art zu bewegen.

Eine druckmittelbetätigte Schaltvorrichtung eines Stufenwechselgetriebes gemäß dem Oberbegriff des Anspruchs 1 ist aus der DE 34 35 160 C2 bekannt. An der Schaltstange ist mittig eine Schaltgabel befestigt. Die Schaltstange trägt an ihren beiden axialen Enden je einen Kolben und ist in zylindrischen Ausnehmungen an gegenüberliegenden Seiten des Getriebegehäuses axial verschiebbar gelagert. Je ein Kolben bildet zusammen mit je einer zylindrischen Ausnehmung eine Druckkammer. Jede Druckkammer kommuniziert mittels einer Druckmittelleitung mit einem Druckmittelreservoir, wobei die Druckmittelleitungen in gegenüberliegenden Wandungen des Getriebegehäuses eingebracht sind. Durch Anlegen unterschiedlicher Drücke in beiden Druckkammern kann die Schaltstange in drei axial benachbarte Positionen verfahren werden. Weiterhin ist ein an der Schaltstange angreifendes Federelement vorgesehen. Fällt während eines Schaltvorganges die Druckmittelzufuhr aus, hat dieses Federelement die Aufgabe den Schaltvorgang zu Ende zuführen oder den oder die Schaltstange die in ursprüngliche Position zurückzuführen.
Neben der Vielzahl der benötigten Dichtungsstellen ist and eine räumliche Trennung der Druckmittelleitungen im Getriebegehäuse vorhanden. Das Einbringen der Druckmittelleitungen in sich gegenüberliegende Wandungen des Getriebegehäuses stellt einen aufwendigen und kostenintensiven Arbeitsschritt dar.

### Zusammenfassung der Erfindung

Der Erfindung liegt daher die Aufgabe zugrunde, eine druckmittelbetätigte Schaltvorrichtung eines Stufenwechselgetriebes zu schaffen, für die die Kosten und der Aufwand bei der Bearbeitung des Getriebegehäuses gesenkt werden.

Erfindungsgemäß wird die Aufgabe durch die Merkmale des Anspruchs 1 gelöst; die Schaltstange ist zumindest teilweise hohl ausgeführt und zumindest die erste Druckkammer kommuniziert über den hohl ausgeführten Teil der Schaltstange mit der zugehörigen Druckmittelleitung.
Die Schaltstange ist zumindest teilweise mit einer Bohrung versehen, wobei mindestens ein axiales Ende der Schaltstange, welches in einem der Druckkammern angebracht ist, offen ausgeführt ist. Eine Druckmittelleitung kommuniziert mit der Bohrung der Schaltstange. Dadurch kann das Druckmittel über die Druckmittelleitung und die Bohrung in diese Druckkammer gelangen. In dieser Ausführungsform ist mehr Flexibilität bzgl. des genauen Verlaufs der Druckmittelleitungen gegeben. Auch denkbar wären Druckmittelleitung die au-ßerhalb der Wandungen des Getriebegehäuses verlaufen.

In einer vorteilhaften Weiterbildung der Erfindung ist auf der Schaltstange im Bereich der axialen Enden je ein ringförmiger Körper angebracht.
Die Ringkörper können kraftschlüssig oder mittels Schweiß-, Niet- oder Klebeverbindung mit der Schaltstange verbunden sein. Vorteilhafterweise schließen die ringförmigen Körper an den Stirnseiten der Schaltstange bündig mit dieser ab. Dadurch vergrößern sich die radialen Flächen, an denen das Druckmittel angreifen kann.

In einer vorteilhaften Ausführung der Erfindung mündet die zweite Druckmittelleitung direkt in die zweite Druckkammer. Weiterhin mündet die erste Druckmittelleitung in einen Hohlraum, der sich an die zweite Druckkammer anschließt. Zusätzlich ist die Schaltstange mit einer axialen ersten Bohrung versehen, wobei sich die Bohrung von einem axialen Ende der Schaltstange zum anderen axialen Ende erstreckt. Weiterhin ist vorgesehen, dass der Hohlraum mit der Bohrung der Schaltstange kommuniziert.

In dieser Ausführungsform verlaufen die Druckmittelleitung nahe benachbart in einer Wand des Getriebegehäuses. Die Druckmittelleitungen münden in benachbarte Hohlräume. Der erste Hohlraum ist über die durchgehende Bohrung in der Schaltstange mit der ersten Druckkammer an dem von den Hohlräumen abgewandten axialen Ende der Schaltstange verbunden. Druckmittel kann über diesen Weg in die erste Druckkammer gelangen und eine axial gerichtete Kraft auf die Schaltstange bzw. eine Stirnseite des ringförmigen Körpers ausüben. Der zweite Hohlraum, in den die andere Druckmittelleitung mündet ist die zweite Druckkammer, in der das Druckmittel ebenfalls eine axial gerichtete Kraft auf die Schaltstange bzw. eine Stirnseite des ringförmigen Körpers ausüben kann. Vorteilhaft wirkt sich in dieser Ausführungsform aus, dass nur eine Getriebegehäusehälfte mit Druckmittelleitungen zu versehen ist, wodurch der Aufwand und die Kosten zur Herstellung des Getriebegehäuses signifikant sinken.

In einer vorteilhaften Weiterbildung der Erfindung ist in der zweiten Druckkammer ein zumindest teilweise zylindrisch ausgeführter Hydraulikeinsatz mit einer entlang der Zylinderachse durchgehenden zweiten Bohrung angebracht, wobei dessen erstes axiales Ende in die hohl ausgeführte Schaltstange und dessen zweites axiales Ende in eine Getriebegehäusebohrung im Boden der zweiten Druckkammer eingreift, der Hydraulikeinsatz den Hohlraum von der zweiten Druckkammer trennt und die Verbindungsstellen zwischen dem Hydraulikeinsatz und der Schaltstange und zwischen dem Hydraulikeinsatz und dem Boden der zweiten Druckkammer druckdicht ausgeführt sind.
Der Boden des ersten Zylinders ist mit einer Getriebegehäusebohrung versehen. Die beiden Druckmittelleitungen münden in der Getriebegehäusebohrung, wobei die Druckmittelleitungen in axialer Richtung der Schaltstange versetzt zueinander angeordnet sind. Ein zumindest teilweise zylindrisch ausgeführter Hydraulikeinsatz ist in diese Bohrung eingeführt. Dabei ist der Hydraulikeinsatz derart ausgeführt, dass eine seiner zylindrischen Mantelflächen in die Getriebegehäusebohrung eingreift und an einer Stelle zwischen den Druckmittelleitungen einen druckdichten, ringförmigen Kontakt mit dem Getriebegehäuse bildet. Vorteilhafterweise ist der Außendurchmesser des Hydraulikeinsatzes im Bereich der ersten Druckmittelleitung geringer ausgeführt, wodurch ein Hohlraum in Form einer ringförmigen Nut gebildet wird, in die die erste Druckmittelleitung mündet.
Der Hydraulikeinsatz ist mit einem sich in axialer Richtung der Schaltstange erstreckenden zylindrischen Abschnitt versehen, wobei dieser in die Bohrung der Schaltstange eingreift. Der Außendurchmesser dieses zylindrischen Abschnittes ist dem Innendurchmesser der Bohrung der Schaltstange angepasst. Weiterhin ist auf der Außenmantelfläche dieses zylindrischen Abschnittes ein Dichtring vorgesehen, der die Kontaktfläche zur Schaltstangenbohrung abdichtet. In den Hydraulikeinsatz ist eine Bohrung eingebracht, die sich von dessen in der Schaltstange befindlichen Ende bis in den Bereich der ringförmigen Nut erstreckt. Die Nut und die Bohrung sind über radial innerhalb des Hydraulikeinsatzes verlaufende Stichbohrungen miteinander verbunden.
Die erste Druckmittelleitung kommuniziert über die Nut, die Stichbohrungen, die Bohrung innerhalb des Hydraulikeinsatzes und die Bohrung innerhalb der Schaltstange mit der ersten Druckkammer, die durch einen ersten Zylinder und die Stirnfläche der Schaltstange bzw. eine Stirnseite des ringförmigen Körpers begrenzt wird.
Die zweite Druckmittelleitung mündet direkt in den zweiten Zylinder, der nun durch die Stirnseite der Schaltstange bzw. eine Stirnseite des ringförmigen Körpers, die Mantelfläche des Zylinders und den Hydraulikeinsatz begrenzt wird.
Neben dem Vorteil der eng benachbarten Druckmittelleitungen liegt ein weiterer Vorteil darin, dass die Zuleitungen zu den Druckkammern durch einfache Mittel, und zwar durch eine Bohrung und einen kostengünstigen Hydraulikeinsatz, gewährleistet wird.

Vorteilhafterweise ist die erste Druckkammer mit einem Längsanschlag für die Schaltstange bzw. den ringförmigen Körper versehen. Diese kann mittels einer Mulde im Boden der ersten Druckkammer ausgeführt sein. Vorteilhafterweise ist die Mulde im Bereich der ersten Bohrung der zumindest teilweise hohl ausgeführten Schaltstange angeordnet und erstreckt sich in radialer Richtung zumindest teilweise über die Begrenzung der Bohrung hinaus. Weiterhin ist in der zweiten Druckkammer ebenfalls ein Längsanschlag vorgesehen.
Durch diese Weiterbildung wird gewährleistet, dass selbst dann, wenn die Schaltstange am Boden des Zylinders zum Anliegen kommt, das Druckmittel weiterhin an der Stirnfläche der Schaltstange angreifen und die Schaltstange damit verschoben werden kann. Die Längsanschläge können natürlich auch durch vorstehende Keile, ringförmige Abstandshalter oder dergleichen in den Zylindermantelflächen oder Zylinderböden gebildet werden.
Ebenfalls möglich ist, dass der Längsanschlag der zweiten Druckkammer einteilig mit dem Hydraulikeinsatz ausgebildet ist.

In einer vorteilhaften Weiterbildung der Erfindung sind auf dem zylindrischen Abschnitt des Hydraulikeinsatzes und der ersten Bohrung der Schaltstange Positionssensoren angebracht.

Weiterhin ist vorgesehen, dass zwischen den inneren zylindrischen Mantelflächen der Zylinder und der Schaltstange je ein Radial-Linearwälzlager angeordnet ist.

Als Schaltelement ist ein Schaltfinger oder eine Schaltgabel, als Druckmittel ist ein Hydraulikmittel oder Druckluft vorgesehen.

### Kurze Beschreibung der Zeichnung

Weitere Merkmale der Erfindung ergeben sich aus der nachfolgenden Beschreibung und aus den Zeichnungen, in der Ausführungsbeispiele der Erfindung vereinfacht dargestellt sind. Es zeigen:
- Figur 1: einen Längsschnitt durch eine erfindungsgemäße Schaltvorrichtung,
- Figur 2: eine vergrößerte Darstellung der Einzelheit A,

### Ausführliche Beschreibung der Zeichnung

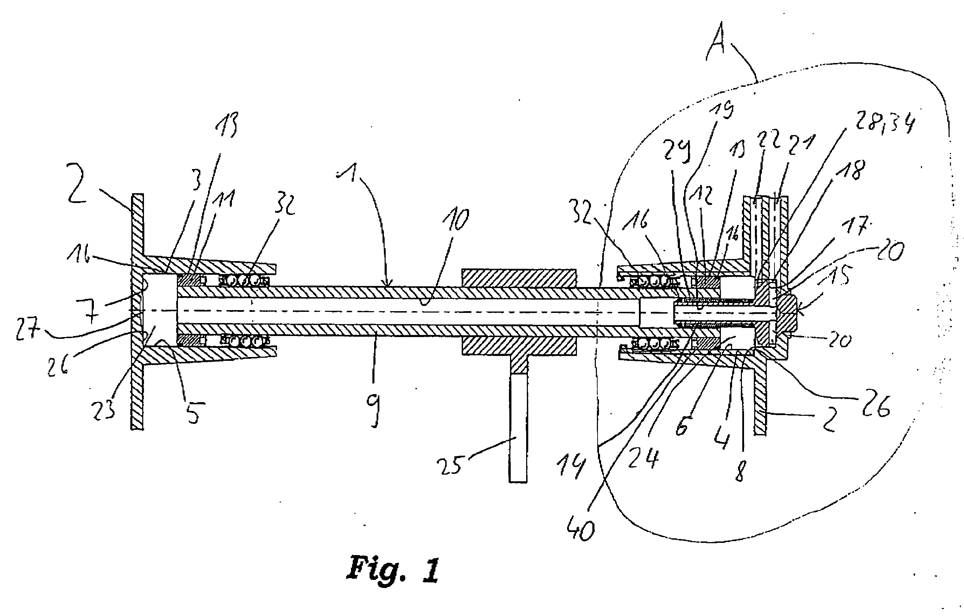

In Figur 1 ist eine erfindungsgemäße Schaltvorrichtung 1 dargestellt. An einem Getriebegehäuse 2 sind zwei sich gegenüberliegende Zylinder 3 und 4, mit jeweils einer inneren zylindrischen Mantelfläche 5 und 6 und jeweils einem Boden 7 und 8 ausgeformt. Die aufeinander zuweisenden Stirnflächen der Zylinder 3 und 4 sind offen ausgeführt. Eine Schaltstange 9 greift mit je einem ihrer axialen Enden durch die offenen Stirnflächen in einen der Zylinder 3 und 4 ein. Auf den axialen Enden der Schaltstange 9 ist jeweils ein ringförmiger Körper 11 und 12 angebracht. Die zylindrischen Körper 11 und 12 sind beispielsweise aus Kunststoff oder einem geeigneten Metall, bzw. einer Metallegierung gefertigt. Die Schaltstange 9 ist mit einer durchgehenden ersten Bohrung 10 versehen. Die äußeren zylindrischen Mantelflächen 13 der ringförmigen Körper 11 und 12 liegt an der jeweiligen inneren Mantelfläche 5 und 6 der Zylinder 3 und 4 an. Die Schaltstange 9 ist in den Zylindern 3 und 4 axial verschiebbar angeordnet, wobei entweder die inneren Mantelflächen 5 und 6 oder die äußeren Mantelflächen 13 der ringförmigen Körper 11 und 12 mit einer geeigneten Kunststoff oder Metallschicht versehen ist, um die Reibung bei axialer Verschiebung der Schaltstange 9 zu minimieren. Ebenfalls denkbar ist dass die Schaltstange 9 über Radial-Linearwälzlager 32, welche in Hülsen 40, vornehmlich Stahlhülsen laufen, in den Zylindern 3 und 4 linear verschiebbar und drehbar gelagert ist. Die Verbindung zwischen den ringförmigen Körpern 5 und der Schaltstange 9 kann beispielsweise durch Kraftschluss oder Schweißverbindungen hergestellt werden. An den äußeren Mantelflächen 13 der ringförmigen Körper 11 und 12 sind Dichtring 16 vorgesehen, die den Innenraum der Zylinder 3 und 4 druckdicht vom Außenraum trennen.

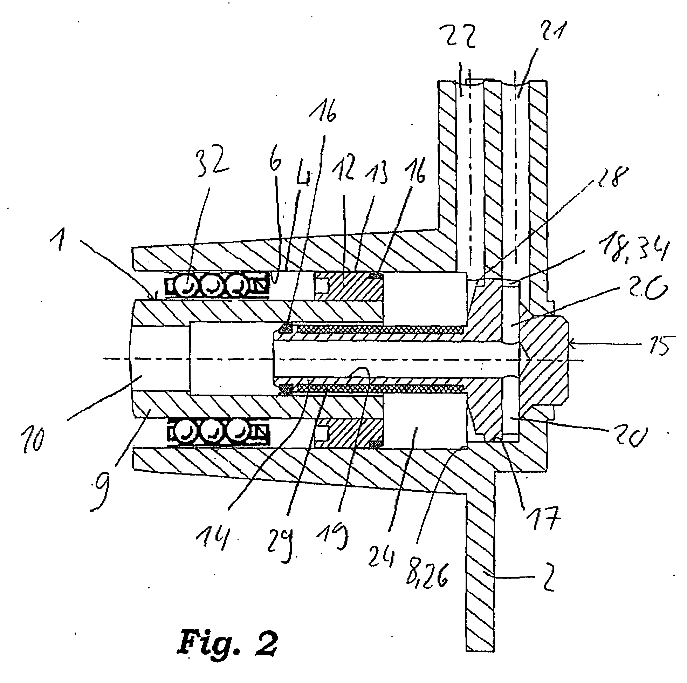

Die Schaltstange 9 ist an ihrem axialen Ende, welches in den zweiten Zylinder 4 eingreift axial verschiebbar auf einem zylindrischen Abschnitt 14 eines Hydraulikeinsatzes 15 geführt. (Figur 2). Der zylindrische Abschnitt 14 greift in die erste Bohrung 10 der Schaltstange 9 ein. Der Außendurchmesser des zylindrischen Abschnitts 14 ist dem Innendurchmesser der ersten Bohrung 10 angepasst. Weiterhin ist in der äußeren Mantelfläche des zylindrischen Abschnitts 14 ein Dichtring 16 vorgesehen, der eine druckdichte Verbindung zwischen den beiden zylindrischen Flächen herstellt. Der zylindrische Abschnitt 14 des Hydraulikeinsatzes 15 ragt aus der ersten Bohrung 10 der Schaltstange 9 heraus auf den Boden 8 des zweiten Zylinders 4 zu. Im Boden 8 des zweiten Zylinders 4 ist eine Getriebegehäusebohrung 17 vorgesehen, in den der Hydraulikeinsatz 15 hineinragt. Die Getriebegehäusebohrung 17 ist derart ausgeführt, dass der Hydraulikeinsatz 15 in radialer Richtung druckdicht mit der Getriebegehäusebohrung 17 abschließt. Diese Verbindung kann beispielsweise mittels Kraftschluss oder Schweißverbindungen hergestellt werden. Auf der vom zweiten Zylinder 4 abgewandten Seite der Verbindungsstelle ist der Durchmesser des Hydraulikeinsatzes 15 kleiner als an der Verbindungsstelle selbst ausgeführt. Dadurch entsteht ein druckdicht vom zweiten Zylinder 4 isolierter Hohlraum 34 in Form einer ersten Ringnut 18. Der Hydraulikeinsatz 15 ist mit einer zweiten Bohrung 19 versehen. Diese erstreckt sich in axialer Richtung vom zylindrischen Abschnitt 14 bis in den Bereich des Hydraulikeinsatzes 15, der von der ersten Ringnut 18 umgeben ist. Die zweite Bohrung 19 ist mittels Stichbohrungen 20 mit der ersten Ringnut 18 verbunden.

In der Wand des Getriebegehäuses 2 sind eine erste und eine zweite Druckmittelleitung 21 und 22 vorgesehen. Die erste und zweite Druckmittelleitung 21 und 22 verlaufen benachbart in der Wand des Getriebegehäuses 2, welche sich an den zweiten Zylinder 4 anschließt. Dabei ist die erste Druckmittelleitung 21 mit der ersten Ringnut 18 verbunden. Weiterhin ist die zweite Druckmittelleitung 22 mit dem zweiten Zylinder 4 verbunden. Der erste Zylinder 3, der ringförmige Körper 11, die Schaltstange 9 und die innere Wandung der zweiten Bohrung 19 des Hydraulikeinsatzes 15 begrenzen das Volumen der ersten Druckkammer 23. Der zweite Zylinder 4, der Hydraulikeinsatz 15, die Schaltstange 9 und der ringförmige Körper 12 bilden ein abgeschlossenes Volumen der zweiten Druckkammer 24.

Wird über die zweite Druckmittelleitung 22 ein Druckmittel zugeführt, so gelangt dieses in die zweite Druckkammer 24 und beaufschlagt die Stirnflächen der Schaltstange 9 und des ringförmigen Körpers 8 mit einer Kraft. Diese Kraft führt zu einer axialen Verschiebung der Schaltstange 9 in Richtung des ersten Zylinders 3, wodurch ein auf der Schaltstange 9 angebrachtes Schaltelement 25 ebenfalls verschoben wird. Wird über die erste Druckmittelleitung 21 ein Druckmittel zugeführt, so gelangt dieses über die erste Ringnut 18, die Stichbohrungen 20, die zweite Bohrung 19 des Hydraulikeinsatzes 15 und die erste Bohrung 10 der Schaltstange 9 in die zweite Druckkammer 24. Das zugeleitete Druckmittel beaufschlagt die Stirnflächen der Schaltstange 9 und des ringförmigen Körpers 7 mit einer Kraft, wodurch die Schaltstange 9 und damit das Schaltelement 25 in axialer Richtung auf den zweiten Zylinder 4 zu bewegt wird.
Das Schaltelement 25 kann beispielsweise eine Schaltgabel oder ein Schaltfinger sein. Vorteilhafterweise ist die Schaltstange 9 drehbar in den Zylindern 3 und 4 angebracht.

Sowohl in der ersten als auch in der zweiten Druckkammer 23 und 24 sind Längsanschläge 26 vorgesehen um zu gewährleisten, dass die Schaltstange 9 mit Hilfe des Druckmittels auch dann betätigt werden kann, wenn sich die Schaltstange 9 in einer ihrer axialen Extremstellungen befindet. Beispielhaft ist in Figur 1 eine Mulde 27 dargestellt, die derart ausgebildet ist, dass sie zumindest einen Teil der Fläche der ersten Bohrung 10 und der Stirnseite der Schaltstange 9 überdeckt.
In der zweiten Druckkammer 24 ist der Längsanschlag 26 durch unterschiedliche Durchmesser des Bodens 8 des zweiten Zylinders 4 und der zweiten Bohrung 19 realisiert. Dabei ist der Durchmesser der zweiten Bohrung 19 geringer als der Innendurchmesser des zweiten Zylinders 4 ausgeführt. Der Außendurchmesser des Hydraulikeinsatzes 15 ist in diesem Bereich kleiner ausgeführt, als der Innendurchmesser der Getriebegehäusebohrung 17, wodurch eine zweite Ringnut 28 gebildet wird. Befindet sich die Schaltstange 9 in einer Stellung in der sie am Boden 8 des zweiten Zylinders 4 anliegt, so kann das Druckmittel über die zweite Druckmittelleitung 22 in die zweite Ringnut 28 gelangen und die Schaltstange 9 mit einer axialen Kraft beaufschlagen.

Während eines Schaltvorgangs wird die Schaltstange 9 in axialer Richtung auf dem zylindrischen Abschnitt 14 des Hydraulikeinsatzes 15 verschoben. Zur Positionsbestimmung der Schaltstange 9 sind in die Außenfläche des zylindrischen Abschnitts 14 Positionssensoren 29, wie beispielsweise Induktionsänderungs-, Hall- oder Reed-Sensoren, angebracht.

In allen Ausführungsformen Kann als Druckmittel eine geeignete Hydraulikflüssigkeit oder Druckluft verwendet werden. Das Schaltelement kann durch eine Schaltgabel oder einen Schaltfinger realisiert sein.

### Bezugszahlenliste

- 1: Schaltvorrichtung
- 2: Getriebegehäuse
- 3: Zylinder
- 4: Zylinder
- 5: Mantelfläche
- 6: Mantelfläche
- 7: Boden
- 8: Boden
- 9: Schaltstange
- 10: erste Bohrung
- 11: Körper
- 12: Körper
- 13: Mantelfläche
- 14: Abschnitt
- 15: Hydraulikeinsatz
- 16: Dichtring
- 17: Getriebegehäusebohrung
- 18: Ringnut
- 19: zweite Bohrung
- 20: Stichbohrungen
- 21: erste Druckmittelleitung
- 22: zweite Druckmittelleitung
- 23: erste Druckkammer
- 24: zweite Druckkammer
- 25: Schaltelement
- 26: Längsanschlag
- 27: Mulde
- 28: zweite Ringnut
- 29: Positionssensoren
- 32: Radial-Linearwälzlager
- 40: Hülse

## Patentansprüche

1. Druckmittelbetätigte Schaltvorrichtung (1) eines Stufenwechselgetriebes mit
- einer Schaltstange (9), an der ein Schaltelement (25) befestigt ist,
- mit einem ersten und einem zweiten Zylinder (3 und 4), wobei je ein axiales Ende der Schaltstange (9) in einen der Zylinder (3 und 4) derart eingreift, dass Druckkammern (23 und 24) ausgebildet sind und
- mit einer Druckmittelleitung (21 und 22) pro Druckkammer (23 und 24), wobei je eine Druckmittelleitung (21 und 22) mit einer Druckkammer (23 und 24) kommuniziert und diese mit einem Druckmittel beaufschlagt, **dadurch gekennzeichnet, dass**,
- die Schaltstange (9) zumindest teilweise hohl ausgeführt ist und zumindest die erste Druckkammer (23) über den hohl ausgeführten Teil der Schaltstange (9) mit der zugehörigen Druckmittelleitung (21) kommuniziert.

2. Schaltvorrichtung (1) nach Anspruch 1, **dadurch gekennzeichnet, dass** auf der Schaltstange (9) im Bereich der axialen Enden je ein ringförmiger Körper (11 und 12) angebracht ist.

3. Schaltvorrichtung (1) nach Anspruch 1, **dadurch gekennzeichnet, dass** die zweite Druckmittelleitung (22) direkt in die zweite Druckkammer (24) mündet.

4. Schaltvorrichtung (1) nach Anspruch 1, **dadurch gekennzeichnet, dass** die erste Druckmittelleitung (21) in einen Hohlraum (34) mündet, der sich an die zweite Druckkammer (24) anschließt.

5. Schaltvorrichtung (1) nach Anspruch 4, **dadurch gekennzeichnet, dass** die Schaltstange (9) mit einer axialen ersten Bohrung (10) versehen ist, wobei sich die erste Bohrung (10) von einem axialen Ende der Schaltstange (9) zum anderen axialen Ende erstreckt.

6. Schaltvorrichtung (1) nach Anspruch 5, **dadurch gekennzeichnet, dass** der Hohlraum (34) mit der Bohrung (10) der Schaltstange (9) kommuniziert.

7. Schaltvorrichtung (1) nach Anspruch 6, **dadurch gekennzeichnet, dass** in der zweiten Druckkammer (24) ein zumindest teilweise zylindrisch ausgeführter Hydraulikeinsatz (15) mit einer entlang der Zylinderachse durchgehenden zweiten Bohrung (19) angebracht ist, wobei dessen erstes axiales Ende in die hohl ausgeführte Schaltstange (9) und dessen zweites axiales Ende in eine Getriebegehäusebohrung (17) im Boden (8) der zweiten Druckkammer (24) eingreift, der Hydraulikeinsatz (15) den Hohlraum (34) von der zweiten Druckkammer (24) trennt und die Verbindungsstellen zwischen dem Hydraulikeinsatz (15) und der Schaltstange (9) und zwischen dem Hydraulikeinsatz (15) und dem Boden (8) der zweiten Druckkammer (24) druckdicht ausgeführt sind.

8. Schaltvorrichtung (1) nach Anspruch 2, **dadurch gekennzeichnet**, die erste Druckkammer (23) mit eine Längsanschlag (26) für die Schaltstange (9) bzw. den ringförmigen Körper (11) versehen ist.

9. Schaltvorrichtung (1) nach Anspruch 8, **dadurch gekennzeichnet, dass** der Längsanschlag (26) mittels einer Mulde (27) im Boden (7) der ersten Druckkammer (23) ausgeführt ist.

10. Schaltvorrichtung (1) nach Anspruch 9, **dadurch gekennzeichnet, dass** die Mulde (27) im Bereich der ersten Bohrung (10) der zumindest teilweise hohl ausgeführten Schaltstange (9) angeordnet ist und sich in radialer Richtung zumindest teilweise über die Begrenzung der ersten Bohrung (10) erstreckt.

11. Schaltvorrichtung (1) nach der Anspruch 2 oder 3, **dadurch gekennzeichnet, dass** die zweite Druckkammer (24) mit einem Längsanschlag (26) versehen ist.

12. Schaltvorrichtung (1) nach Anspruch 6 oder 11, **dadurch gekennzeichnet, dass** auf dem zylindrischen Abschnitt (14) des Hydraulikeinsatzes (15) und der ersten Bohrung (10) der Schaltstange (9) Positionssensoren (29) angebracht sind.

13. Schaltvorrichtung (1) nach einem der Ansprüche 1 oder 12, **dadurch gekennzeichnet, dass** zwischen den inneren zylindrischen Mantelflächen (5 und 6) der Zylinder (3 und 4) und der Schaltstange (9) je ein Radial-Linearwälzlager angeordnet ist.

14. Schaltvorrichtung (1) nach Anspruch 1, **dadurch gekennzeichnet, dass** das Schaltelement (25) eine Schaltgabel ist.

15. Schaltvorrichtung (1) nach Anspruch 1, **dadurch gekennzeichnet, dass** das Schaltelement (25) ein Schaltfinger ist.

16. Schaltvorrichtung (1) nach Anspruch 1, **dadurch gekennzeichnet, dass** das Druckmittel ein Hydraulikmittel ist.

17. Schaltvorrichtung (1) nach Anspruch 1, **dadurch gekennzeichnet, dass** das Druckmittel Druckluft ist.

## Claims

1. Pressure-medium actuated gearshift device (1) of a multi-step variable speed gear transmission comprising
- Gearshift rod (9) on which gearshift element (25 is fixed,
- a first and a second cylinder (3 and 4), each axial end of the gearshift rod (9) extending into one of the cylinders (3 and 4) in such a way that pressure chambers (23 and 24) are formed, and
- one pressure medium duct (21 and 22) per pressure chamber (23 and 24), each pressure medium duct (21 and 22) communicating with one of the pressure chambers (23 and 24) and loading this with a pressure medium,
**characterised in that**
- the gearshift rod (9) has an at least partially hollow configuration, and at least the first pressure chamber (23) communicates with the associated pressure medium duct (21) through the part of the gearshift rod (9) having the hollow configuration.

2. Gearshift device (1) according to claim 1, **characterised in that** an annular body (11 and 12) is attached to the gearshift rod (9) in the region of each axial end.

3. Gearshift device (1) according to claim 1, **characterised in that** the second pressure medium duct (22) opens directly into the second pressure medium chamber (24).

4. Gearshift device (1) according to claim 1, **characterised in that** the first pressure medium duct (21) opens into a hollow space (34) that is connected to the second pressure chamber (24).

5. Gearshift device (1) according to claim 4, **characterised in that** the gearshift rod (9) is provided with a first bore (10) that extends in axial direction from a first axial end of the gearshift rod (9) to the other axial end.

6. Gearshift device (1) according to claim 5, **characterised in that** the hollow space (34) communicates with the bore (10) of the gearshift rod (9).

7. Gearshift device (1) according to claim 6, **characterised in that** an at least partially cylindrical hydraulic insert (15) having a continuous second bore (19) extending along the cylinder axis is fixed in the second pressure chamber (24), a first axial end of the hydraulic insert (15) extends into the hollow gearshift rod (9) and a second axial end of the hydraulic insert (15) extends into a transmission casing bore (17) in the bottom (8) of the second pressure chamber (24), the hydraulic insert (15) separates the hollow space (34) from the second pressure chamber (24), and the joint locations between the hydraulic insert (15) and the gearshift rod (9) and between the hydraulic insert (15) and the bottom (8) of the second pressure chamber (24) are pressure sealed.

8. Gearshift device (1) according to claim 2, **characterised in that** the first pressure chamber (23) is provided with a longitudinal stop (26) for the gearshift rod (9) or the annular body (11), as the case may be.

9. Gearshift device (1) according to claim 8, **characterised in that** the longitudinal stop (26) is constituted by a trough (27) in the bottom (7) of the first pressure chamber (23).

10. Gearshift device (1) according to claim 9, **characterised in that** the trough (27) is arranged in the region of the first bore (10) of the gearshift rod (9) having the partially hollow configuration, and said trough (27) extends in radial direction at least partially beyond the limitation of the first bore (10).

11. Gearshift device (1) according to claim 2 or 3, **characterised in that** the second pressure chamber (24) is provided with a longitudinal stop (26).

12. Gearshift device (1) according to claim 6 or 11, **characterised in that** position sensors (29) are attached to the cylindrical portion (14) of the hydraulic insert (15) and on the first bore (10) of the gearshift rod (9).

13. Gearshift device (1) according to one of the claims 1 or 12, **characterised in that** a radial linear rolling bearing is arranged between the inner cylindrical peripheral surfaces (5 and 6) of each of the cylinders (3 and 4) and the gearshift rod (9).

14. Gearshift device (1) according to claim 1, **characterised in that** the gearshift element (25) is Gearshift fork.

15. Gearshift device (1) according to claim 1, **characterised in that** the gearshift element (25) is Gearshift finger.

16. Gearshift device (1) according to claim 1, **characterised in that** the pressure medium is a hydraulic medium.

17. Gearshift device (1) according to claim 1, **characterised in that** the pressure medium is compressed air.

## Revendications

1. Dispositif (1) de changement de vitesses à actionnement hydraulique pour une boîte de changement de vitesses, comprenant
- une tringle (9) de changement de vitesses sur laquelle est fixé un élément (25) de changement de vitesses,
- un premier et un second cylindre (3 et 4), chacune des extrémités axiales de la tringle (9) de changement de vitesses s'engageant de telle façon dans l'un des cylindres (3 et 4) qu'il se forme des chambres de pression (23 et 24), et
- un conduit (21 et 22) de milieu sous pression pour chacune des chambres de pression (23 et 24), chaque conduit (21 et 22) de milieu sous pression communiquant avec l'une des chambres de pression (23 et 24) en la mettant sous charge par un milieu sous pression, **caractérisé en ce que**
- la tringle (9) de changement de vitesses a une configuration au moins partiellement vide, et, au moins, la première chambre de pression (23) communique à la faveur de la partie vide de la tringle (9) de changement de vitesses avec le conduit (21) associé de milieu sous pression

2. Dispositif (1) de changement de vitesses selon la revendication 1, **caractérisé en ce que**, un corps annulaire (11 et 12) est attaché à la tringle (9) de changement de vitesses dans la région de chacune des extrémités axiales.

3. Dispositif (1) de changement de vitesses selon la revendication 1, **caractérisé en ce que** le second conduit (22) de milieu sous pression débouche directement dans la seconde chambre de pression (24).

4. Dispositif (1) de changement de vitesses selon la revendication 1, **caractérisé en ce que** le premier conduit de milieu sous pression (21) débouche dans un espace vide (34) qui se raccorde à la seconde chambre de pression (24).

5. Dispositif (1) de changement de vitesses selon la revendication 4, **caractérisé en ce que** la tringle (9) de changement de vitesses est munie d'un premier alésage (10) qui s'étend en direction axiale à partir de l'une extrémité axiale de la tringle (9) de changement de vitesses à l'autre extrémité axiale de celle-ci.

6. Dispositif (1) de changement de vitesses selon la revendication 5, **caractérisé en ce que** l'espace vide (34) communique avec l'alésage (10) de la tringle (9) de changement de vitesses.

7. Dispositif (1) de changement de vitesses selon la revendication 6, **caractérisé en ce que**, dans la seconde chambre de pression (24) est inséré un insert (15) hydraulique à configuration au moins partiellement cylindrique qui comprend un second alésage (19) qui est un alésage de passage et s'étend le long de l'axe de cylindre, une première extrémité axiale de cet insert (15) s'engage dans la tringle (9) de changement de vitesses à configuration vide et sa seconde extrémité axiale s'engage dans un alésage (17) du carter de la boîte de vitesses, lequel alésage (17) est situé dans le fond (8) de la seconde chambre de pression (24), l'insert (15) hydraulique sépare l'espace vide (34) de la seconde chambre de pression (24), et les endroits de jonction entre l'insert (15) hydraulique et la tringle (9) de changement de vitesses et entre l'insert (15) hydraulique et le fond (8) de la seconde chambre de pression (24) sont rendus étanche à la pression.

8. Dispositif (1) de changement de vitesses selon la revendication 2, **caractérisé en ce que** la première chambre de pression (23) est munie d'un arrêt longitudinal (26) pour la tringle (9) de changement de vitesses respectivement pour le corps annulaire (11).

9. Dispositif (1) de changement de vitesses selon la revendication 8, **caractérisé en ce que** l'arrêt longitudinal (26) est formé par une auge (27) dans le fond (7) de la première chambre de pression (23).

10. Dispositif (1) de changement de vitesses selon la revendication 9, **caractérisé en ce que** l'auge (27) est agencée dans la région du premier alésage (10) de la tringle (9) de changement de vitesses à configuration au moins partiellement vide, et cette auge (27) s'étend en direction radiale au moins partiellement au-delà de la limitation du premier alésage (10).

11. Dispositif (1) de changement de vitesses selon la revendication 2 ou 3, **caractérisé en ce que** la seconde chambre de pression (24) est munie d'un arrêt longitudinal (26).

12. Dispositif (1) de changement de vitesses selon la revendication 6 ou 11, **caractérisé en ce que** des détecteurs (29) de position sont appliqués à la partie cylindrique (14) de l'insert (15) hydraulique et au premier alésage (10) de la tringle (9) de changement de vitesses.

13. Dispositif (1) de changement de vitesses selon l'une des revendications 1 ou 12, **caractérisé en ce que**, un roulement radial linéaire est agencé, à chaque fois, entre les surfaces périphériques cylindriques intérieures (5 et 6) des cylindres (3 et 4) et la tringle (9) de changement de vitesses.

14. Dispositif (1) de changement de vitesses selon la revendication 1, **caractérisé en ce que** l'élément (25) de changement de vitesses est une fourchette de changement de vitesses.

15. Dispositif (1) de changement de vitesses selon la revendication 1, **caractérisé en ce que** l'élément (25) de changement de vitesses est un doigt de changement de vitesses.

16. Dispositif (1) de changement de vitesses selon la revendication 1, **caractérisé en ce que** le milieu sous pression est un milieu hydraulique

17. Dispositif (1) de changement de vitesses selon la revendication 1, **caractérisé en ce que** le milieu sous pression est de l'air comprimé.
